# EUROPEAN PATENT APPLICATION

(11) **EP 4 790 576 A1**
(43) Date of publication of application: **12.08.2026**
(21) Application number: 25305187.4
(22) Date of filing: 11.02.2025
(51) Int. Cl.: G06F 21/55, H04L 9/00, G06F 21/75

(54) **PROTECTION OF INTEGRATED CIRCUIT AGAINST SIDE CHANNEL ATTACKS**

(71) Applicant: THALES DIS FRANCE SAS, 92190 Meudon (FR)
(72) Inventor: POMET, Alain, 13790 PEYNIER (FR); DUVAL, Benjamin, 83470 SAINT MAXIMIN (FR); MIGAIROU, Vincent, 13530 TRETS (FR); HEYDEMANN, Karine, 13100 Aix-en-Provence (FR)
(74) Representative: Bricks, Amélie

(57) **Abstract**

The invention provides a method for detecting a side channel attack on an integrated circuit (100). For each input command received (400) and processed (401) by the integrated circuit, obtaining (403) at least a first piece of information and a second piece of information, and these pieces of information are accumulated (404) for N input commands.

Input values are determined (405), comprising a first input based on the first pieces of information and a second input based on the second pieces of information. A classification model is applied (406) to the determined input values to output a classification result and a side channel attack is detected (407) based on the classification result. The first and second pieces of information are of different information types.

## Description

This invention is related to the field of protection of integrated circuits against physical attacks known as Side Channel Attacks, SCA.

The invention is useful in particular in the context of non invasive SCA, in which an attacker provides a series of input commands to the integrated circuit in order to measure physical variables that are representative of the operations of the integrated circuit.

Non invasive SCA are difficult to detect for the integrated circuit, or for the device embedding the integrated circuit, as it relies on normal operations of the integrated circuit and as the physical variables may be observed by measurement units that are external to the integrated circuit. Such physical variables can be electromagnetic radiations, power consumption or sounds emitted by the integrated circuit for example.

Non invasive SCA may be implemented by the attacker on a bench, in a controlled environment, in which physical parameters such as temperature, sound and so on, are held as constant as possible, so that the variations of the physical variables are exclusively due to the operations implemented by the integrated circuit. Indeed, the key factor to a successful SCA is the accuracy of the measurements of the physical variables.

To extract some knowledge about secret information (for example a secret key) that is manipulated by the integrated circuit during operations applied to input commands, the attacker needs to access to a large number of measurements of the physical variables. A large number of commands are therefore input by the attacker to measure millions or billions of traces, each trace being a measure of a physical variable during operation of the integrated circuit for a given input command.

Such a large number of commands is necessary for the attacker to obtain robust statistics about the physical variables, which enable the attacker to derive the secret information.

The general improvement of computing capacities and of storage capacities makes it possible for an attacker to collect and process several billions of traces in a reasonable time frame, which enables to retrieve secret information that is not visible for a lower magnitude order of traces.

In addition, the use of machine learning techniques for processing the traces accelerates the attack convergence time, because it requires to process less traces than conventional methods and because it avoids the need to pre-process the traces, which can be directly input in the model trained by machine learning.

To overcome this, counter measures can be implemented by the integrated circuit to slow down the attack or to hide the secret information by adding some noise to the physical variables that are measured by the attacker.

To avoid that the counter measures are detrimental to the performance of the integrated circuit, they need to be implemented only when a side channel attack is ongoing.

There is therefore a need to efficiently detect a non invasive side channel attack in an integrated circuit.

The invention aims at improving the situation.

A first aspect of the invention concerns a method for detecting a side channel attack on an integrated circuit, comprising the following operations:
- for each input command received and processed by the integrated circuit, obtaining at least one first piece of information and at least one second piece of information;
- upon accumulation of first and second pieces of information for N input commands, N being an integer greater than or equal to 2, determining input values comprising at least one first input derived from the accumulated first pieces of information and at least one second input derived from the accumulated second pieces of information;
- applying a classification model to the determined input values, the classification model being configured for outputting a classification result based on the input values;
- detecting a side channel attack based on the classification result.

The at least one first piece of information and the at least one second piece of information are of different information types among the following:
- a first information type related to the input command;
- a second information type related to a reader in communication with the integrated circuit to provide the input command;
- a third information type related to at least one physical parameter of the integrated circuit.

The invention therefore proposes to implement a classification model that is configured for determining a classification result based on information that is obtained by the integrated circuit. This enables to detect a side channel attack. In addition, detection is enhanced by taking into account different types of information, among the first, second and third information types, which improves the accuracy of the classification result.

According to some embodiments, the classification model may be arranged to output a classification result based on which a side channel attack is detected, when at least one of the input values matches a predefined stability criterion.

For example, at least one of the input values may be a standard deviation value obtained for N accumulated pieces of information of a given information type, and the stability criterion may indicate that the at least one input value is below a predetermined threshold. If the standard deviation value is below the predetermined threshold, this indicates that the accumulated pieces of information based on which the standard deviation value is determined, are stable, which indicates that a side channel attack is ongoing. This enables to detect side channel attacks, for which :
- a series similar input commands is submitted to the integrated circuit (stability of the pieces of information of the first information type); and/or
- the same reader is repeatedly used for submitting input commands to the integrated circuit (stability of the pieces of information of the second information type) ; and/or
- the environment is controlled (stability of the pieces of information of the third information type).

According to some embodiments, for each input command, at least one piece of information of the first information type may comprise:
- a timing piece of information indicating when the input command is received by the integrated circuit; and/or
- at least one feature of the input command.

Such pieces of information can be directly obtained by the integrated circuit without the need to add sensors in the integrated circuit, which facilitates the implementation of the invention as a software.

According to some embodiments, at least one input value determined based on accumulated pieces of information of the first information type may comprise:
- N timing pieces of information respectively obtained for the N input commands; and/or
- N features respectively obtained for the N input commands; and/or
- a statistics determined based on the N timing pieces of information of the N input commands; and/or
- a statistics determined based on the N features of the N input commands.

Such input values enable to detect a context in which input commands are repeatedly submitted to the integrated circuit, on a short period, with similar input commands or with input commands varying according to a pattern. Such context may indicate that a side channel attack is ongoing. Therefore, the accuracy associated with the classification result output by the classification model is enhanced.

According to some embodiments, for each input command, at least one piece of information of the second information type may comprise:
- a measurement of a reader pad impedance for the input command; and/or
- a power supply level of the reader, during operations on the input command; and/or
- a Voltage Continuous Current value during a peak consumption of the integrated circuit during operations on the input command; and/or
- a piece of information about the clock of the reader; and/or
- a piece of information about a synchronization between the integrated circuit and the reader; and/or
- a piece of information about a character length used by the reader; and/or
- a piece of information about a protocol error management of the reader.

Such pieces of information can be directly obtained by the integrated circuit, when the integrated circuit is a smart card intended to be in communication with a reader. These pieces of information are relevant as they characterize the reader and different readers may therefore have different pieces of information of the second information type.

According to some embodiments, at least one input value determined based on accumulated pieces of information of the second information type may comprise:
- one or several series of N pieces of information of the second information type; and/or
- at least one statistics determined based on at least one series of N pieces of information of the second information type

Such input values are representative of the stability of the pieces of information of the second information type (related to the reader), which can indicate that the same reader is used for the N consecutive input commands as it is the case when a side channel attack is ongoing. For example, one of the statistics may be a standard deviation value, which may be compared with a predefined threshold to detect that the accumulated pieces of information of the second information type are stable. Therefore, this reinforces the accuracy of the classification result output by the classification model.

According to some embodiments, for each input command, at least one piece of information of the third information type may comprise:
- a temperature value of the integrated circuit during operations on the input command; and/or
- a field level of an antenna of the integrated circuit during operations on the input command.

These pieces of information may be available in integrated circuits for other purposes than side channel attack detection. In addition, they are representative of the environment surrounding the integrated circuit.

According to some embodiments, at least one input value determined based on accumulated pieces of information of the third information type may comprise:
- a series of N temperature values of the integrated circuit during operations on the N input commands; and/or
- a series of N antenna field levels during operations on the N input commands; and/or
- at least one statistics determined based on the series of N temperature values; and/or
- at least one statistics determined based on the series of N antenna field levels.

These input values are representative of the stability of the environment surrounding the integrated circuit. A high stability for repeated input commands may indicate that the environment is controlled, as it is the case when a side channel attack is ongoing. For example, one of the statistics may be a standard deviation value, which may be compared with a predefined threshold to detect that the accumulated pieces of information of the third information type are stable Therefore, this reinforces the accuracy of the classification result output by the classification model.

According to some embodiments, the classification model may be a decision tree.

Such structure of classification model is quick to execute and requires few computational and memory resources, which makes it compatible with most of the integrated circuits.

According to some embodiments, the method may further comprise a preliminary phase of training the classification model by supervised learning, based on a set of training data.

This enables to implement a classification model with optimized parameters. The accuracy of the classification result is therefore improved.

According to some embodiments, the method may further comprise, upon detection of the side channel attack based on the classification result, implementing at least one predefined countermeasure.

Therefore, the implementation of the countermeasure is conditioned by the detection of a side channel attack. This enables to protect the integrated circuit against side channel attacks, without slowing down the operations of the integrated circuit in normal use cases.

In complement, the at least one predefined countermeasure may comprise one or several of the following:
- de-synchronization of the operations performed upon reception of next input commands; and/or
- mixing of real and false encryptions;
- leakage of false correlations; and/or
- delocalized processing; and/or
- adding of delays during operations based on next input commands; and/or
- protocol error introduction; and/or
- change in the next input commands, before processing the next input commands.

Such countermeasures enable to prevent an attacker from implementing a successful side channel attack on the integrated circuit.

A second aspect of the invention concerns a computer program comprising instructions arranged for implementing the method according to the first aspect of the invention, when said instructions are executed by a processor.

A third aspect of the invention concerns an integrated circuit, comprising an input interface arranged for receiving input commands, and a processor configured for executing operations on the input commands,
wherein the processor is further configured for:
- for each received and processed input command, obtaining at least one first piece of information and at least one second piece of information;
- upon accumulation of first and second pieces of information for N input commands, N being an integer greater than or equal to 2, determining input values comprising at least one first input derived from the accumulated first pieces of information and determining at least one second input derived from the accumulated second pieces of information;
- applying a classification model to the determined input values, the classification model being configured for outputting a classification result based on the input values;
- detecting a side channel attack based on the classification result.

The at least one first piece of information and the at least one second piece of information are of different information types among the following
- a first information type related to the input command;
- a second information type related to a reader in communication with the integrated circuit to provide the input command;
- a third information type related to at least one physical parameter of the integrated circuit.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

### Brief description of the drawings:

[Fig. 1] shows an environment in which an attacker implements a non-invasive side channel attack on an integrated circuit according to some embodiments of the invention;
[Fig. 2] illustrates the structure of an integrated circuit according to some embodiments of the invention;
[Fig. 3] illustrates the steps of a preliminary training phase of a method according to some embodiments of the invention;
[Fig. 4] illustrates the steps of a current operation phase of a method according to some embodiments of the invention.

### Detailed description

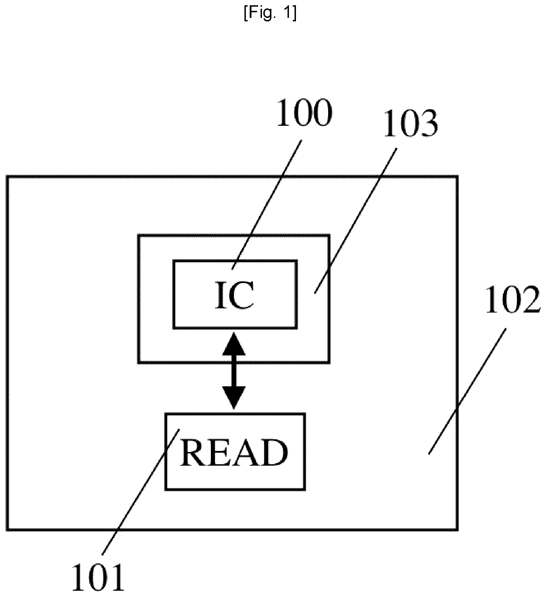

Figure 1 shows an environment 102 in which an attacker attempts to perform a non invasive side channel attack on an integrated circuit 100 according to some embodiments of the invention.

No restriction is attached to the integrated circuit 100, which encompasses any chip comprising electronic components that provide processing and storage capabilities to perform operations on received input commands.

To perform these operations, the integrated circuit 100 may store some secret information, such as one or several secret keys for example. The side cannel attack performed by the attacker aims at determining this secret information by measuring physical variables of the integrated circuit 100, during operation of a series of input commands.

To do this, the attacker installs the integrated circuit 100 on a bench 103, which is arranged to measure at least one physical variable, and generally several physical variables of the integrated circuit 100, during sequential operations that are executed by the integrated circuit 100 on a series of input commands that are provided by the attacker. The bench 103 may therefore comprise at least one measuring device arranged to record or measure the evolution of the physical variable, after or while each input command is provided to the integrated circuit 100. By repeating this, the attacker attempts to determine statistics about the at least one measured physical variable, and to derive the secret information from the determined statistics, and optionally from the series of input commands.

For example, the integrated circuit 100 can be a smart card. Such a smart card is intended to be in wireless communication with a reader that provides an input command and receives a response from the smart card, the response being obtained by executing some operations on the input command.

Alternatively, the integrated circuit 100 may be a secure element embedded or integrated in a larger device having other functionalities, such as a communication device for example. In that case, the secure element may be interfaced with other components of the device, in particular to receive the input commands. The secure element is therefore not intended to be in wireless communication with a reader, contrary to the embodiments in which the integrated circuit is a smart card.

In what follows, it is considered, for illustrative purpose only, that the integrated circuit 100 is a smart card that is able to be in wireless communication with a reader. Therefore, in that embodiment, the attacker uses a reader 101 that is able to be in wireless communication with the smart card 100, to transmit input commands to the smart card 100 so that the smart card performs operations based on the input commands.

To enhance the quality of measurements performed on the bench 103, the attacker controls the environment 102, so that it remains as stable as possible: the reader 101 used in the environment remains the same for all the input commands, the operating mode of providing the input commands remains the same, the voltage supply provided to the smart card 100 is stable or highly regulated, the input commands are the same or their variations are according to a given pattern, the temperature in the environment 102 is stable, the electromagnetic field is stable, and so on.

By doing this, the attacker ensures that the variations of the measured physical variables depend as much as possible on the secret information manipulated by the integrated circuit 100 and by the input command submitted by the attacker.

The invention described in what follows enables to detect this stability, to infer that a side channel attack is ongoing, and to trigger one or several counter measures.

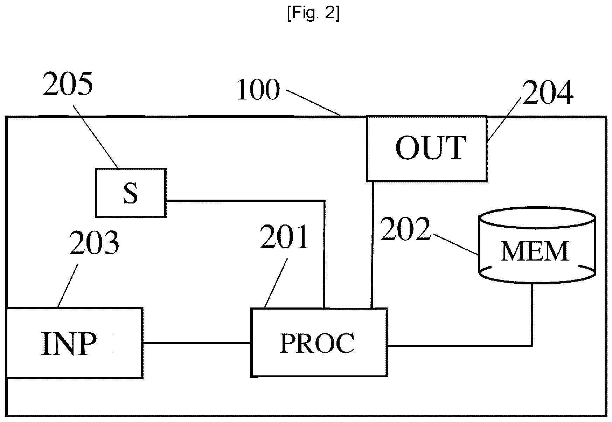

Figure 2 shows the structure of the integrated circuit 100 according to some embodiments of the invention.

The integrated circuit 100 comprises a processor 201 and a memory 202.

The processor 201 may comprise one or multiple microprocessors, microcontrollers or Digital Signal Processor, DSP, on a single Integrated Circuit (IC) or several IC chips.

No restriction is attached to the memory 202, which may be any non-transient, tangible form of memory. For example, it can comprise ROM, RAM, EEPROM and/or flash memory. The processor 201 may be programmable and may be configured to execute instructions that are stored in its internal memory or to execute instructions that are stored in the memory 202. According to some embodiments, the memory 302 may comprise several memories, including at least one Non Volatile Memory, NVM. The memory 202 may further comprise a secure memory for storing secret information such as one or several secret keys for example.

The processor 201 and memory 202 are configured to perform operations on input commands that are received on an input interface 203, by manipulating the secret information, to determine a response that can be returned via an output interface 204. In the embodiments in which the integrated circuit 100 is a smart card, the input interface 203 and the output interface 204 can be one and the same wireless interface, such as a Near Field Communication, NFC, interface for example, comprising at least one antenna. Alternatively, in the embodiments in which the integrated circuit 100 is a secure element of a larger device, the input interface 203 and the output interface 204 may be wired interfaces, arranged to communicate with one or several other components of the communication device, to receive the input commands and to return the respective responses.

The operations performed by the processor 201 and memory 202 based on the input commands are the main functionalities of the integrated circuit. In addition, according to the invention, the integrated circuit 100 is configured to implement an attack detection function, which can be implemented by the processor 201 (or a separate processing unit distinct from the main processor 201) and the memory 202 (or an additional memory distinct from the main memory 202).

To this end, the memory 202 (or the additional memory) further stores parameters of a classification model that is described in what follows. The classification model, once executed by the processor 201, is configured to receive input values comprising at least a first input value and at least a second input value as described in what follows, and is configured to obtain a classification result, based on which the processor 201 can determine whether a side channel attack is ongoing or not.

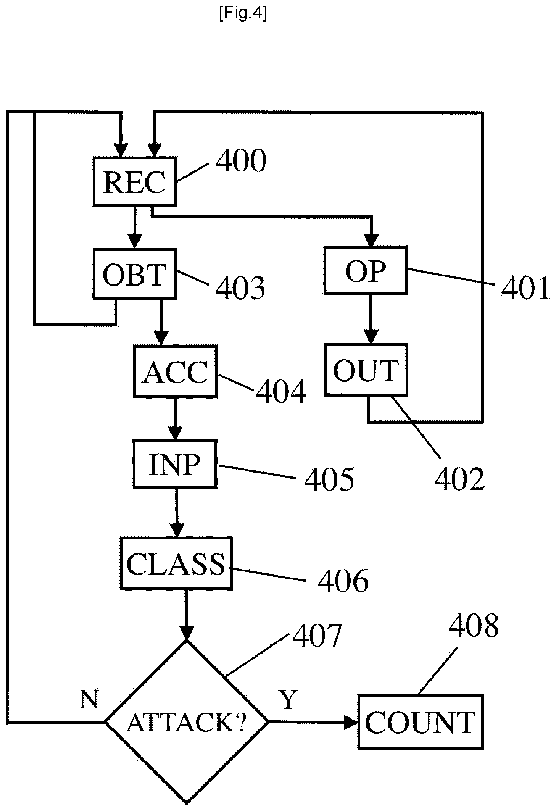

More generally, the memory 202 (or the additional memory) can store instructions for implementing the steps of the current operation phase described when referring to figure 4.

In addition, the integrated circuit 100 is further configured to store in memory 202 one or several series of N first pieces of information and one or several series of N second pieces of information, obtained for the N last input commands, as explained in what follows. According to some embodiments, when obtaining at least one first piece of information and at least one second piece of information for a new input command, the oldest at least one first piece of information and the oldest at least one second piece of information can be deleted from the memory 202, so that the memory 202 maintains updated the series of N first pieces of information and the series of N second pieces of information.

The integrated circuit 100 according to the invention may further comprise at least one sensor 205 arranged for sensing at least one piece of information related to a physical parameter of the integrated circuit (a piece of information of the third information type as described in what follows). For example, the at least one sensor 205 may comprise a temperature sensor.

In the embodiments in which the integrated circuit 100 is a secure element integrated or embedded in a larger device, the at least one sensor 205 may be external of the integrated circuit and may be part of the device embedding or integrating the integrated circuit 100. Therefore, the at least one piece of information sensed by the at least one sensor can be received by the integrated circuit 100 via the input interface 203.

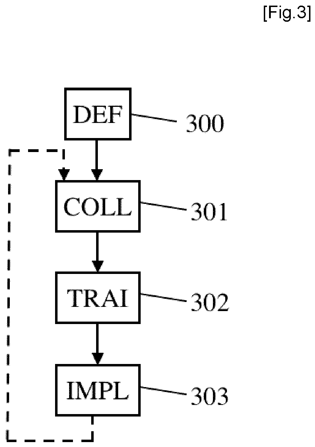

Figure 3 shows the steps of a preliminary phase of a method for detecting a side channel attack, according to some embodiments of the invention.

The preliminary phase aims at building and training the classification model that is implemented during the current operation phase (described when referring to figure 4).

The classification model according to the invention is arranged to receive input values comprising at least one first input value and at least a second input value, wherein the at least one first input value can be derived from first pieces of information that are accumulated by the integrated circuit during the current operation phase and wherein the at least one second input value can be derived from second pieces of information that are accumulated by the integrated circuit during the current operation phase, the first and second pieces information being of different information types among the following information types:
- a first information type related to the input command;
- a second information type related to a reader in communication with the integrated circuit to provide the input command;
- a third information type related to at least one physical parameter of the integrated circuit.

For example:
- the first pieces of information are of the first information type and the second pieces of information are of the second information type; or
- the first pieces of information are of the first information type and the second pieces of information are of the third information type; or
- the first pieces of information are of the second information type and the second pieces of information are of the third information type.

Preferably, the first pieces of information or the second pieces information are from the first information type (the one related to the input command), as this enables to detect a context in which a large number of input commands (which are similar or, which vary according to a pattern) are repetitively provided in a short period of time, as it is the case during a side channel attack.

In what follows, it is considered, for illustrative purposes only, that the classification model is arranged to receive at least one first input value derived from first pieces of information of the first information type, at least one second input value derived from second pieces of information of the second information type and at least one third input value derived from third pieces of information of the third information type.

Information of the first information type, which can be obtained for each input command by the integrated circuit 100 during the current operation phase, may comprise:
- a timing piece of information indicating when an input command is received; and/or
- at least one feature of the input command.

These pieces of information can be accumulated for a series of N consecutive input commands, N being an integer greater than or equal to 2, and preferably greater than 10.

The at least one input value that can be derived from the pieces of information of the first information type accumulated for a series of N input commands, can be:
- the series of timing pieces of information (in that case, the at least one input value is a series of N input values, each input value being one of the timing pieces of information) and/or the series of features of the input commands (in that case, the at least one input value is at least one series of N input values, each input value being one of the at least one feature). In that case, the pieces of information of the first information type accumulated by the integrated circuit 100 are directly provided as input values for the classification model; and/or
- a statistics determined based on the series of timing pieces of information, such as the average delay between consecutive input commands, or the standard deviation of the delays between consecutive input commands, which enables to determine a regularity in providing input commands to the integrated circuit, which may indicate that a side channel attack is ongoing;
- a statistics determined based on the series of features of the input commands. The variations between the features of the input commands may be regular or may form a pattern, which may indicate that a side channel attack is ongoing.

Information of the second information type, which can be obtained for each input command by the integrated circuit 100 during the current operation phase, may comprise:
- a measurement of a reader pad impedance for the input command; and/or
- a power supply level of the reader, during operations on the input command; and/or
- a VCC (Voltage Continuous Current) value during a peak consumption of the integrated circuit during operations on the input command; and/or
- a piece of information about the clock of the reader; and/or
- a piece of information about the synchronization between the smart card and the reader; and/or
- a piece of information about a character length used by the reader; and/or
- a piece of information about a protocol error management of the reader; and/or
- any other information related to the reader.

The at least one input value that can be derived from the pieces of information of the second information type accumulated for a series of N input commands, can be:
- one or several series of N pieces of information of the second information type. In that case, the pieces of information of the second information type accumulated by the integrated circuit 100 are directly provided as input values for the classification model; and/or
- at least one statistics (for example an average value, a standard deviation, or any other statistics) determined based on at least one series of N pieces of information. For example a statistic can be a standard deviation value of a series of N pieces of information (or several standard deviation values for several series of N pieces of information), which is representative of the stability of the information of the second information type (related to the reader), which can indicate that the same reader is used for the N consecutive input commands as it is the case when a side channel attack is ongoing (for example if the standard deviation is below a predetermined threshold).

Information of the third information type, which can be obtained for each input command by the integrated circuit 100 during the current operation phase, may comprise:
- a temperature value of the integrated circuit during operations on the input command, for example measured by the at least one sensor 205 of the integrated circuit; and/or
- a field level of an antenna of the integrated circuit 100, in the embodiments in which the input and output interfaces 203 and 204 are wireless interfaces.

The at least one input value that can be derived from the pieces of information of the third information type accumulated for a series of N input commands, can be:
- the series of N temperature values or the series of N antenna field levels. In that case, the pieces of information of the third information type accumulated by the integrated circuit 100 are directly provided as input values for the classification model; and/or
- at least one statistics (for example an average value, a standard deviation, or any other statistics) determined based on the series of N temperature values. The standard deviation of the series of N temperature values indicates whether the temperature of the integrated circuit 100 is stable or not: a high level of stability (if the standard deviation is below a predetermined threshold) may indicate that a side channel attack may be ongoing, as the environment 102 described previously is controlled; and/or
- at least one statistics (for example an average value, a standard deviation, or any other statistics) determined based on the series of N antenna field levels. The standard deviation of the series of N antenna field levels indicates whether the temperature of the integrated circuit 100 is stable or not: a high level of stability (if the standard deviation is below a predetermined threshold) may indicate that a side channel attack may be ongoing, as the environment 102 described previously is controlled.

Referring back to figure 3, at a step 300, a structure of the classification model is defined. The structure of the classification is defined by:
- the number of inputs and the format of each input;
- the format of the classification result in output;
- the type of classification model (for example a decision tree, a clustering model, an artificial neuronal network, and so on).

For example, the classification model can be a decision tree, arranged for receiving input values comprising at least one first input value and at least one second input value (and optionally at least one third input value, as explained above). A decision tree provides the advantage of requiring few computation resources and memory resources to be executed, so that it can be integrated in any integrated circuit 100, even in integrated circuits having low resources. Alternatively, for integrated circuits 100 having higher resources, the classification model may be an artificial neuronal network, or other models that can be trained by machine learning.

In addition to its structure, the classification model is defined by a set of parameters. According to the invention, this set of parameters can be trained during the preliminary phase of figure 3, to obtain optimized parameters.

To this end, training data can be collected at step 301. For example, to train the classification model using supervised learning, the training data comprises associations between:
- training input values comprising at least first and second training input values: the number of training input values of each association, their respective information types and their formats depending on the structure of the classification model as defined at step 300;
- a reference classification result, which is used as a label for the supervised learning (representing the ground truth).

The number of associations forming the training data is higher than 100 and preferably higher than 1000. The different associations also preferably comprise a broad panel of first and second training input values, so as to ensure that the trained classification is robust.

For example, the training data can be collected by a centralized server for a plurality of integrated circuits obtaining the training input values, and indicating whether these training input values have been obtained while a side channel attack was ongoing or not. In that case, the training data can be continuously enriched, which enable to update the parameters of the classification model on a regular basis, as described in what follows.

At a step 302, the parameters of the classification model are optimized by training the classification model based on the training data.

Initially, the parameters of the classification model can be set to initial values, that are not optimized. No restriction is attached to the initial values of the parameters, which can be randomly determined.

For example, the training input values of a first set of associations of training data are submitted as input values to the classification model defined by the initial parameters. The classification model determines a set of classification results and the set of classification results is compared with the reference classifications results of the set of associations. The parameters of the classification model are then optimized (modified) based on the comparison and the training step 302 is repeated for subsequent sets of associations of training data, until a predetermined convergence criterion of the classification model is reached. The principle of training using supervised learning is well known and is not further defined in the following description.

Once the convergence criterion is reached, the training is stopped, and the optimized parameters defining the classification model are obtained.

At a step 303, the classification model, including its optimized parameters, can be loaded in the memory 202 of the integrated circuit 100.

It is to be noted that steps 300 to 303 of the preliminary phase are not implemented by the integrated circuit 100, but by another entity, for example a server or any device with sufficient computing capabilities, associated with a manufacturer of integrated circuits. The steps 300 to 303 can be implementing before implementing the classification model in several integrated circuits 100 that are manufactured by the manufacturer.

Steps 301 and 302 can also be repeated upon collection of additional training data, after the classification model has been loaded in integrated circuits 100, and while the integrated circuits 100 are in use (after they have been put on the market for example).

The additional collected training data can be used to further optimize the parameters of the classification model by repeating step 302. Updated optimized parameters of the classification model are obtained, which can be charged in the memory 202 of the integrated circuit 100, for example during an update procedure of the integrated circuit 100.

Figure 4 shows the steps of a current operation phase of a method for detecting a side channel attack, according to some embodiments of the invention.

The steps of the current operation phase can be performed by the integrated circuit 100 as previously described.

At a step 400, the integrated circuit 100 receives an input command via the input interface 203. In the embodiments in which the integrated circuit 100 is a smart card, the input command can be receive wirelessly from the reader 101.

At a step 401, the integrated circuit 100 performs operations based on the input command (according to its main functionalities) to determine a response to the input command. During step 401, the integrated circuit 100 may manipulate at least some of the secret information that is stored in memory 202, as previously explained. At a step 402, the response determined at step 401 is transmitted via the output interface 203, for example to the reader 101 in the embodiments in which the integrated circuit 100 is a smart card. The method then returns to step 400 upon reception of a new input command.

In parallel to steps 401 and 402, the integrated circuit 100 can implement steps 403 to 408, which aim at determining whether the integrated circuit 100 is under a side channel attack or not.

At a step 403, the integrated circuit 100 obtains at least one first piece of information and at least one second piece of information, the first and second pieces of information being of different types, among the first, second and third information types that have been previously described.

According to some embodiments, and depending on the inputs of the classification model, the integrated circuit 100 obtains at least one first piece of information of the first information type, at least one second piece of information of the second information type and at least one third piece of information of the third information type.

According to a specific example, given for illustrative purpose only, the integrated circuit 100 obtains, at step 400:
- the piece of timing information indicating when the input command has been received at step 400 and a feature of the input command, which are two first pieces of information according to the first information type;
- a measurement of the reader pad impedance (for example measured by the input interface 203), which is a single second piece of information according to the second information type; and
- a temperature value of the integrated circuit 100, which can be measured by the sensor 205, which is a single third piece of information of the third information type.

At a step 404, the integrated circuit 100 stores the pieces of information obtained at step 403, in memory 202 for example. The method then goes back to step 400 until the new input command is received. Steps 403 and 404 are therefore also repeated and the repetition of step 404 is an accumulation, by the integrated circuit 100, of the first pieces of information and of the second pieces of information (and optionally the third pieces of information), for several input commands, for example for several consecutive input commands.

As previously explained, the integrated circuit 100 may store the first pieces of information and the second pieces of information (and optionally the pieces of information) obtained for the last N input commands.

At a step 405, which is performed after information has been accumulated for the N last input commands, the integrated circuit 100 derives at least one first input value from the first pieces of information accumulated for the N last input commands and derives at least one second input value from the second pieces of information accumulated for the N last input commands (and optionally derives at least one third input value from the third pieces of information accumulated for the N last input commands).

Examples of input values that can be derived from the pieces of information of the first, second and third information types have been described previously.

In the example described for illustrative purposes, the following input values can be derived from the accumulated pieces of information:
- an average of the timing pieces of information for the N input commands and at least one statistics based on the features of the N input commands, which are two first input values;
- a standard deviation of the N measurements of reader pad impedance, which is a single second input value; and
- a standard deviation of the N accumulated temperature values, which is a single third input values.

At a step 406, the integrated circuit 100 determines a classification result by applying the classification model to the at least one first input value and to the at least one second input value (and optionally to the at least one third input value), determined at step 405.

The classification result can be binary: a first value indicates that a side channel attack is detected and a second value indicates that no side channel attack is detected. Alternatively, the classification result can be a probability score, indicating a probability that a side channel attack is ongoing.

At a step 407, the integrated circuit 100 detects that a side channel attack is ongoing, or detects an absence of side channel attack, based on the classification result determined at step 406. In case where the classification result is a probability score, the integrated circuit may compare the probability score with a threshold to determine whether a side channel attack is ongoing or not.

In case of an absence of side channel attack, the method goes back to step 400, to receive new input commands, and to ensure a continuous monitoring of the side channel attack detection of steps 403 to 407.

In case of detection of a side channel attack at step 407, the integrated circuit 100 may implement at least one predefined countermeasure at a step 408.

No restriction is attached to the at least one predefined countermeasure, which may comprise:
- de-synchronization of the operations performed upon reception of input commands, which may comprise jitter de-synchronization, operation rhythm de-synchronization, execution order de-synchronization, opcode de-synchronization; and/or
- mixing of real and false encryptions;
- leakage of false correlations; and/or
- delocalized processing; and/or
- adding of delays, for example delays of hundreds of milliseconds introduced by a Power-on reset generator of the integrated circuit 100; and/or
- protocol error introduction, using Pulse Per Second, PPS; and/or
- change in the input command to process before processing the next input commands, for example a message to be ciphered by the integrated circuit 100 (in direct side channel attack, the attacker is unable to verify the ciphered message returned by the integrated circuit 100).

Therefore, the invention enables to activate a set of at least one countermeasure, only in case of a detected side channel attack, without slowing down applicative use cases.

The embodiments are described in sufficient detail to enable those of ordinary skill in the art to embody and implement the systems and processes herein described. It is important to understand that embodiments can be provided in many alternate forms and should not be construed as limited to the examples set forth herein.

## Claims

1. A method for detecting a side channel attack on an integrated circuit (100), comprising the following operations:
- for each input command received (400) and processed (401) by the integrated circuit, obtaining (403) at least one first piece of information and at least one second piece of information;
- upon accumulation (404) of first and second pieces of information for N input commands, N being an integer greater than or equal to 2, determining (405) input values comprising at least one first input derived from the accumulated first pieces of information and at least one second input derived from the accumulated second pieces of information;
- applying (406) a classification model to the determined input values, the classification model being configured for outputting a classification result based on the input values;
- detecting (407) a side channel attack based on the classification result;
wherein the at least one first piece of information and the at least one second piece of information are of different information types among the following :
- a first information type related to the input command;
- a second information type related to a reader (101) in communication with the integrated circuit to provide the input command;
- a third information type related to at least one physical parameter of the integrated circuit.

2. The method according to claim 1, wherein the classification model is arranged to output a classification result based on which a side channel attack is detected, when at least one of the input values matches a predefined stability criterion.

3. The method according to claim 1 or 2, wherein, for each input command, at least one piece of information of the first information type comprises:
- a timing piece of information indicating when the input command is received by the integrated circuit (100); and/or
- at least one feature of the input command.

4. The method according to one of the preceding claims, wherein at least one input value determined based on accumulated pieces of information of the first information type comprises:
- N timing pieces of information respectively obtained for the N input commands; and/or
- N features respectively obtained for the N input commands; and/or
- a statistics determined based on the N timing pieces of information of the N input commands; and/or
- a statistics determined based on the N features of the N input commands.

5. The method according to one of the preceding claims, wherein, for each input command, at least one piece of information of the second information type comprises:
- a measurement of a reader pad impedance for the input command; and/or
- a power supply level of the reader (101), during operations on the input command; and/or
- a Voltage Continuous Current value during a peak consumption of the integrated circuit (100) during operations on the input command; and/or
- a piece of information about the clock of the reader; and/or
- a piece of information about a synchronization between the integrated circuit and the reader; and/or
- a piece of information about a character length used by the reader; and/or
- a piece of information about a protocol error management of the reader.

6. The method according to one of the preceding claims, wherein at least one input value determined based on accumulated pieces of information of the second information type comprises:
- one or several series of N pieces of information of the second information type; and/or
- at least one statistics determined based on at least one series of N pieces of information of the second information type.

7. The method according to one of the preceding claims, wherein, for each input command, at least one piece of information of the third information type comprises:
- a temperature value of the integrated circuit (100) during operations on the input command; and/or
- a field level of an antenna of the integrated circuit during operations on the input command.

8. The method according to one of the preceding claims, wherein at least one input value determined based on accumulated pieces of information of the third information type comprises:
- a series of N temperature values of the integrated circuit during operations on the N input commands; and/or
- a series of N antenna field levels during operations on the N input commands; and/or
- at least one statistics determined based on the series of N temperature values; and/or
- at least one statistics determined based on the series of N antenna field levels.

9. The method according to one of the preceding claims, wherein the classification model is a decision tree.

10. The method according to one of the preceding claims, comprising a preliminary phase of training the classification model by supervised learning, based on a set of training data.

11. The method according to one of the preceding claims, further comprising, upon detection (407) of the side channel attack based on the classification result, implementing (408) at least one predefined counter measure.

12. The method according to claim 11, wherein the at least one predefined countermeasure comprises one or several of the following:
- de-synchronization of the operations performed upon reception of next input commands; and/or
- mixing of real and false encryptions;
- leakage of false correlations; and/or
- delocalized processing; and/or
- adding of delays during operations based on next input commands; and/or
- protocol error introduction; and/or
- change in the next input commands, before processing the next input commands.

13. A computer program comprising instructions arranged for implementing the method according to one of claims 1 to 12, when said instructions are executed by a processor (201).

14. An integrated circuit (100), comprising an input interface (202) arranged for receiving input commands, and a processor (201) configured for executing operations on the input commands,
wherein the processor is further configured for:
- for each received and processed input command, obtaining at least one piece of first information and at least one second piece of information;
- upon accumulation of first and second pieces of information for N input commands, N being an integer greater than or equal to 2, determining input values comprising at least one first input derived from the accumulated first pieces of information and at least one second input derived from the accumulated second pieces of information;
- applying a classification model to the determined input values, the classification model being configured for outputting a classification result based on the input values;
- detecting a side channel attack based on the classification result;
wherein the at least one first piece of information and the at least one second piece of information are of different information types among the following :
- a first information type related to the input command;
- a second information type related to a reader in communication with the integrated circuit to provide the input command;
- a third information type related to at least one physical parameter of the integrated circuit.
